(19) **Europäisches Patentamt**

**European Patent Office**

**Office européen des brevets**

(11) **EP 0 751 967 B1**

(12) **EUROPEAN PATENT SPECIFICATION**

(45) Date of publication and mention
of the grant of the patent:
**02.05.2001 Bulletin 2001/18**

(21) Application number: **95912839.8**

(22) Date of filing: **08.03.1995**

(51) Int Cl.[7]: $C08F\ 210/02$, C08F 210/16

(86) International application number:
**PCT/US95/02966**

(87) International publication number:
**WO 95/26372 (05.10.1995 Gazette 1995/42)**

(54) **LINEAR LOW DENSITY POLYETHYLENE**

LINEARES POLYETHYLEN MIT NIEDRIGER DICHTE

POLYETHYLENE LINEAIRE A FAIBLE DENSITE

(84) Designated Contracting States:
**BE DE FR GB IT NL**

(30) Priority: **25.03.1994 US 218159**

(43) Date of publication of application:
**08.01.1997 Bulletin 1997/02**

(73) Proprietor: **MOBIL OIL CORPORATION
Fairfax, Virginia 22037-0001 (US)**

(72) Inventors:
• **CHERUVU, Subrahmanyam
Robbinsville, NJ 08691 (US)**
• **LO, Frederick, Yip-Kwai
Piscataway, NJ 08854 (US)**
• **ONG, Shih-May, Christine
Warren, NJ 07059 (US)**
• **SHIRODKAR, Pradeep, Pandurang
Belle Mead, NJ 08502 (US)**

(74) Representative:
**Lawrence, Peter Robin Broughton et al
GILL JENNINGS & EVERY,
Broadgate House,
7 Eldon Street
London EC2M 7LH (GB)**

(56) References cited:
**EP-A- 0 339 571          EP-A- 0 516 458
US-A- 5 026 797          US-A- 5 218 071
US-A- 5 272 236**

Printed by Jouve, 75001 PARIS (FR)

**Description**

This invention relates to linear low density polyethylene (LLDPE) of improved processability and improved properties. The resin can be processed readily on commercial film extruders without modification and exhibits low melt pressure and excellent bubble stability. Films produced from the resin of the invention exhibit improved optical, tensile and impact properties, low heat seal temperature and low extractables.

Accordingly, the invention resides in an ethylene copolymer comprising at least 80 weight percent of ethylene units, which exhibits $I_{10}/I_2$ of less than 7, Mw/Mn of less than 3, a percentage increase in swell, during measurement of $I_2$ of the composition, which is greater than 6%, and $I_{10}/I_2$-4.63 which is less than the Mw/Mn [wherein $I_2$ and $I_{10}$ are measured according to ASTM D1238].

The invention will now be more particularly described with reference to the accompanying drawing which is a graph of $I_2$ swell vs. $I_2$ of LLDPE resins of the invention.

The $M_w/M_n$ of the copolymer of the invention is less than 3. $M_w$ is the weight average molecular weight and $M_n$ is the number average molecular weight, each of which is calculated from molecular weight distribution measured by GPC (gel permeation chromatography). Typically the $M_w/M_n$ ranges from 2.0 to 2.8 or from 2.5 to less than 3.0, although resins have been produced with $M_w/M_n$ lower than 2.5. Conventional LLDPE, produced with Ziegler type titanium containing catalysts, which are not single site catalysts, exhibit $M_w/M_n$ of greater than 3.

In the copolymer of the invention, the numerical value of $I_{10}/I_2$ is less than 7 and the value of $I_{10}/I_2$ - 4.63 is less than $M_w/M_n$. $I_2$, or melt index is measured in accordance with ASTM D-1238; and $I_{10}$ is measured in accordance with ASTM-D 1238. Products have been made with $I_{10}/I_2$ ranging from 5.5 to less than 7.

The copolymer of the invention is linear and has no detecteable long chain branching yet exhibits excellent bubble stability characteristics, compared to conventional linear polyolefins. The reference to bubble stability is material to use of the copolymers in blown film production processes in which bubble stability is prerequisite.

Bubble stability can be correlated to die swell response, which is also referred to as $I_2$ swell. Specifically, as explained below, $I_2$ swell can be correlated to elasticity which in turn can be correlated to bubble stability.

It is well established that "die swell" is a measure of the elasticity of polymer melts (Ref: Polymer Rheology, L.E. Nielsen, pages 111-117, Marcel Dekker Inc., 1977.). In fact, J. E. Guillet et al (Journal of Applied Polymer Science, pages 757-763, vol 8, 1963) used $I_2$ swell to characterize the rheology of polyethylene resins. The $I_2$ swell test used for illustrating properties of the invention resin is similar to the reported test. Specifically, $I_2$ swell is defined as the percentage increase in swell during $I_2$ measurement:

$$100 \times (D/Do-1)$$

where

D = diameter of solid polymer extrudate during $I_2$ measurement
Do = diameter of die orifice in the melt indexer

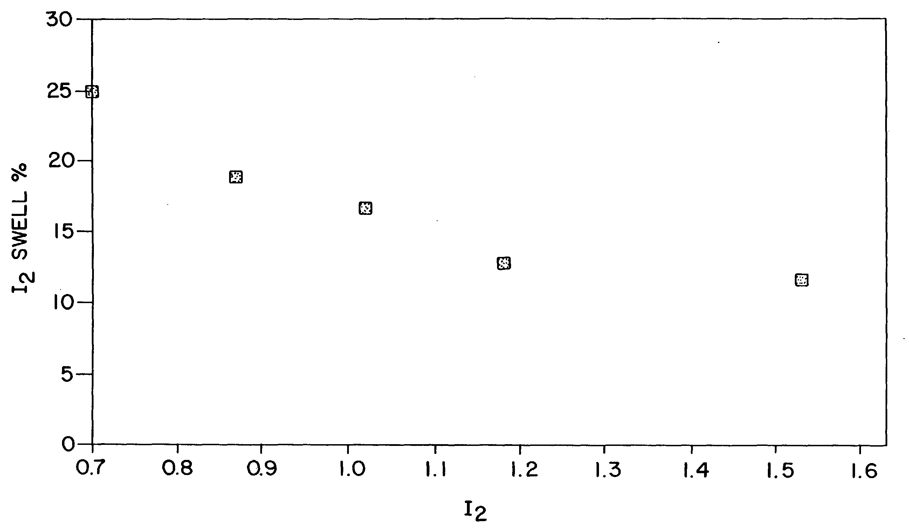

Figure 1 illustrates the $I_2$ swell of the resins of the invention and demonstrates that the elasticity of the resins is consistently high. The high elasticity of invention resin provides significant advantage in terms of increased bubble stability for blown film production. These advantages are unexpected because linear olefin resins, free of long chain branching, with narrow MWD (low $I_{10}/I_2$) normally possess low elasticity which limits their processability and bubble stability. The higher elasticity of the invention resins may be a result of their slightly broader MWD and the presence of HMW tails which are known to have a strong influence on the elasticity of a resin. As discussed below, this high elasticity is not a result of the presence of long chain branching.

To explain the uniqueness of the invention resin, which as described in more detail below are produced from a specific metallocene catalyst, when compared to other gas phase metallocene resins, it may be helpful to discuss factors that control $I_2$ swell. Example 6 clearly demonstrates that certain modifiers ($CO_2$, $O_2$ etc.) increase the $I_2$ swell of the resins. Since prior art metallocene products do not use modifiers it is reasonable to expect that they would not possess the unique swell characteristics of invention metallocene resins.

Long chain branching (LCB) in a polyethylene resin may render the resin highly elastic. The presence of LCB's is detected by the difference in the $I_{10}/I_2$ ratio and Mw/Mn. For all the metallocene resins of the present invention, $I_{10}/I_2$-4.63 is less than Mw/Mn (see Example 5). These criteria establish that the resins of the invention are distinctly linear and contain no detectable long chain branching.

In Figure 1, the results show that the $I_2$ swell of resins of the invention is greater than 6% and preferably greater than 10%. Conventional LLDPE formed with conventional Ziegler catalysts containing titanium as the active metal may exhibit comparable $I_2$ swell values but also exhibit much greater Mw/Mn values than those of the resin of the invention. By comparison, the literature reports that resins produced by other single site catalysts exhibit no long chain branching and narrow molecular weight distribution which, it is generally believed, makes them less elastic and more difficult to process. In the graph of Figure 1, such resins would exhibit $I_2$ swell of less than or around 5% [and obviously, less than those of conventional LLDPE formed from titanium containing Ziegler catalysts.]

Preferably, the copolymer of the invention is low density product having a density as low as 0.88 and up to less than 0.965, preferably from 0.902 to 0.929 g/cm$_3$, and most preferably from 0.903 to 0.922.

The copolymer of the invention exhibits a melt index (MI) which can range up to 150 and up to 300; however, when low MI is desired, resins can be produced which exhibit MI from 0.01 to 5, generally from 0.1 to 5, and preferably from 0.5 to 4, and most preferably 0.8 to 2.0. For blown film, the MI of the copolymers is conventionally lower than those used for cast film, (e.g. a MI value of 0.5 to 1.5 versus 2 to 4, respectively).

The low density products of the invention exhibit a melt flow ratio (MFR) range of 15 to 25, preferably from 15 to 20, and most preferably from 15 to 18. In products of the Examples the MFR ranges from 16 to 18. MFR is the ratio $I_{21}/I_2$ [wherein $I_{21}$ is measured at 190°C in accordance with ASTM D-1238, Condition F and $I_2$ is measured at 190°C in accordance with ASTM D-1238, Condition E.]

Melting points of the products range from 95°C to 130°C. Furthermore, the hexane extractables content is very low, typically ranging from 0.3 to 2.0 wt.%.

When fabricated into films, the copolymer of the invention exhibits a balanced tear strength, as measured by ASTM D1922, which ranges from 50 to 600, preferably from 220 to 420 for machine direction and from 200 to 700, preferably from 200 to 600 for the transverse direction. The films also exhibit high modulus, as measured by ASTM D882, which ranges from 1-6x10$_4$ psi (7-41x10$_4$ kPa), preferably from 2.2-4.5x10$_4$ psi (15-31x10$_4$ kPa); high tensile yield, as measured by ASTM D882 which ranges from 1-3x10$_3$ psi (7-21x10$_3$ kPa), preferably from 1.8-2.3x10$_3$ psi (12-16x10$_3$ kPa).

When fabricated into films, the copolymer of the invention exhibits excellent optical qualities as determined by haze studies, measured by ASTM D-1003 which means that haze is preferably from 3 to 20, preferably from 4 to 10. Films of inferior haze properties exhibit a haze of greater than 10. The importance of the optical properties of LLDPE depends on the intended application of the LLDPE resin. It is generally accepted that the poor optical properties of normal LLDPEs (haze >10 and gloss <50) severely limits their use in applications where film opticals are important. The invention LLDPEs with their improved opticals (haze <10 and gloss >70) significantly broaden the application areas for LLDPE resins.

When fabricated into films, the copolymer of the invention exhibits superior dart impact properties as measured by ASTM D-1709, Method A. For example, the films of the present invention exhibit Dart Drop Impact values from 100 to 2000, preferably from 150 to 1500. The most preferred films exhibit densities of 0.902 to 0.918 and dart drops of greater than 800, generally from 800 to 1500, and up to a measurement which characterizes the product as unbreakable, e.g., a dart drop of 2000.

The above properties are for a 1 mil (0.03mm) film made under a standard fabricating condition outlined in the Examples, on a 3/4 inch (19mm) Brabender extruder, 2-1/2 inch (6.4cm) Brampton Film Extruder or a 3-1/2inch (8.9 cm) Glouster Film Extruder.

The copolymer of the invention is produced by polymerization of ethylene with one or more $C_3$-$C_{10}$ alphaolefins such that the copolymer contains at least 80 weight % ethylene units. The comonomer used with the ethylene preferably contains 3 to 8 carbon atoms, with suitable alpha olefins including propylene, butene-1, pentene-1, hexene-1, 4-methylpentene-1, heptene-1 and octene-1. Preferably, the alpha-olefin comonomer is 1- butene, 1-hexene, and 1- octene. The most preferred alpha olefin is hexene-1. Copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers. Hydrogen may be used as a chain transfer agent in the polymerization reaction of the present invention. Any gas inert to the catalyst and reactants can also be present in the gas stream.

The copolymer of the invention is prepared in the presence of a unique catalyst, described below, preferably under either slurry or more preferably under fluid bed gas phase catalytic polymerization conditions described below. When made in the gas phase fluid bed process, on pilot plant scale, the product is dry and solvent-free and comprises spherical, non-porous particles, which has an average particle size of 0.015 to 0.045 inch (0.4 to 1.1 mm) and a settled bulk density of from 25 to 36 lb/ft$^3$ (400 to 580 kg/m$^3$). Moreover, under these conditions, the copolymer produced is linear without long chain branching.

The catalyst composition employed to produce resin of the present invention contains one transition metal in the form of a metallocene which has an activity of at least 2,000 g polymer/g catalyst or 1,000 kg polymer/g transition metal.

In addition, the catalyst comprises a carrier and an aluminoxane.

The carrier material is a solid, particulate, porous, inorganic or organic materials, but preferably inorganic material, such as an oxide of silicon and/or of aluminum. The carrier material is used in the form of a dry powder having an average particle size of 1 micron to 250 microns, preferably from 10 microns to 150 microns. If necessary, the treated carrier material may be sieved to insure that the particles have an average particle size of less than 150 microns, which is highly desirable in forming narrow molecular weight LLDPE, to reduce gels. The surface area of the carrier is at least 3 square meters per gram ($m^2$/gm), and preferably at least 50 $m^2$/gm up to 350 $m^2$/gm. When the carrier is silica, it is preferably heated to 100°C to 850°C and most preferably at about 250°C. The carrier material should have at least some active hydroxyl (OH) groups to produce the catalyst composition used to produce the resin of this invention.

In the most preferred embodiment, the carrier is silica which, prior to the use thereof in the first catalyst synthesis step, has been dehydrated by fluidizing it with nitrogen and heating at about 250°C for about 4 hours to achieve a surface hydroxyl group concentration of about 1.8 millimoles per gram (mmols/gm). The silica of the most preferred embodiment is a high surface area, amorphous silica (surface area = 300 $m^2$/gm; pore volume of 1.65 $cm^3$/gm), for example the material marketed under the tradenames of Davison 952-1836, Davison 952 or Davison 955 by the Davison Chemical Division of W.R. Grace and Company.

To form the catalysts, all catalyst precursor components can be dissolved with aluminoxane and reacted with a carrier. The carrier material is reacted with an aluminoxane solution, preferably methylaluminoxane, in a process described below. The class of aluminoxanes comprises oligomeric linear and/or cyclic alkylaluminoxanes represented by the formula:

$R$-(Al($R$)-O)$_n$-Al$R_2$ for oligomeric, linear aluminoxanes and (-Al($R$)-O-)$_m$ for oligomeric cyclic aluminoxane

wherein n is 1-40, preferably 10-20, m is 3-40, preferably 3-20 and R is a $C_1$-$C_8$ alkyl group and preferably methyl. Methylaluminoxane (MAO) is a mixture of oligomers with a very wide distribution of molecular weights and usually with an average molecular weight of about 1000. MAO is typically kept in solution in toluene.

In a preferred embodiment, the aluminoxane is incorporated into the carrier by infusing the aluminoxane solution, without forming a slurry of the carrier material, such as silica, in the aluminoxane solution. The volume of the solution of the aluminoxane should be sufficient to fill the pores of the carrier material but should not exceed the pore volume of the silica by more than 30%. Preferably, the volume of the solution of the aluminoxane is equal to the pore volume of the silica.

Solvent may be removed from the aluminoxane impregnated pores of the carrier material by heating and/or under a positive pressure induced by an inert gas, such as nitrogen. If employed, the conditions in this step are controlled to reduce, if not to eliminate, agglomeration of impregnated carrier particles and/or crosslinking of the aluminoxane. Where the solvent is removed by evaporation, this is preferably effected at relatively low elevated temperatures of 40° to 50°C.

In a preferred embodiment, the metallocene is added to the solution of the aluminoxane prior to reacting the carrier with the solution. Again the maximum volume of the aluminoxane solution also including the metallocene is preferably the total pore volume of the carrier material sample. The mole ratio of aluminoxane provided aluminum, expressed as Al, to metallocene metal expressed as M (e.g. Zr), ranges from 50 to 500, preferably 75 to 300, and most preferably 100 to 200. In a preferred embodiment the aluminoxane and metallocene compound are mixed together at a temperature of 20 to 80°C, for 0.1 to 6.0 hours, prior to reaction with the carrier. The solvent for the metallocene and aluminoxane is suitably an aromatic hydrocarbon, a halogenated hydrocarbon or a halogenated aromatic hydrocarbon, and preferably is toluene.

The metallocene compound has the formula $Cp_mMA_nB_p$ in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium. In the above formula of the metallocene compound, the Cp group is an unsubstituted, a mono- or a - polysubstituted cyclopentadienyl group. The substituents on the cyclopentadienyl group can be preferably straight-chain or branched $C_1$-$C_6$ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when m in the above formula of the metallocene compound is equal to 2, the cyclopentadienyl groups can be also bridged by polymethylene or dialkylsilane groups, such as -$CH_2$-,-$CH_2$-$CH_2$-, -CR'R''- and -CR'R''-CR'R''- where R' and R'' are short alkyl groups or hydrogen, -Si($CH_3$)$_2$-, Si($CH_3$)$_2$-$CH_2$-$CH_2$-Si($CH_3$)$_2$- and similar bridge groups. If the A and B substituents in the above formula of the metallocene compound are halogen atoms, they belong to the group of fluorine, chlorine, bromine or iodine. If the substituents A and B in the above formula of the metallocene compound are alkyl or aromatic groups, they are preferably straight-chain or branched $C_1$-$C_8$ alkyl groups, such as methyl, ethyl, n-propyl, isopropyl, n-butyl, isobutyl, n-pentyl, n-hexyl or n-octyl.

Suitable metallocene compounds include bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is titanium, zirconium or hafnium, halide groups are preferably chlorine and the alkyl groups are $C_1$-$C_6$ alkyls. Illustrative, but non-limiting examples of metallocenes include bis(cyclopentadienyl)zirconium dichloride, bis(cyclopentadienyl)-hafnium dichloride, bis (cyclopentadienyl)zirconium dimethyl, bis(cyclopentadienyl)hafnium dimethyl, bis(cyclopentadienyl)zirconium hydridochloride, bis(cyclopentadienyl)hafnium hydridochloride, bis(pentamethylcyclopentadienyl)zirconium dichloride, bis(pentamethylcyclopentadienyl)hafnium dichloride, bis(n-butylcyclopentadienyl)zirconium dichloride, bis(isobutylcyclopentadienyl) zirconium dichloride, bis(dimethylcyclopentadienyl) zircomium dichloride, cyclopentadienyl-zirconium trichloride, bis(indenyl)-zirconium dichloride, bis (4,5,6,7-tetrahydro-1-indenyl)zirconium dichloride, and ethylene-[bis(4,5,6,7-tetrahydro-1-indenyl)] zirconium dichloride.

The catalyst comprising a metallocene compound and an aluminoxane in particulate form is fed to a fluid bed reactor for gas phase copolymerization of ethylene and higher alpha olefins. The copolymerization is effected at a temperature below the sintering temperature of the polymer particles, typically at a temperature of 60° to 115°C, preferably 75° to 95°C, and a pressure of 150 to 350 psig (1100 to 2500 kPa).

A "diluent" gas which is nonreactive under the conditions in the polymerization reactor is typically added to the comonomers. The diluent gas can be nitrogen, argon, helium, methane or ethane. In addition, an electron donating agent, such as an oxygen-containing compound, can be present during the copolymerization to decrease the MI of the copolymer produced. Alternatively, an electron withdrawing agent can be present during the copolymerization to increase the MI of the copolymer produced.

In the fluidized bed reactor, the superficial gas velocity of the gaseous reaction mixture through the bed must exceed the minimum flow required for fluidization, and preferably is at least 0.2 feet per second (0.6 m/sec) above the minimum flow. Ordinarily the superficial gas velocity will not exceed 5.0 feet per second (1.5 m/sec), and most usually no more than 2.5 feet per second (0.8 m/sec) is sufficient. The feed stream of gaseous monomer, with or without inert gaseous diluents, is fed into the reactor at a space time yield of 2 to 10 pounds/hour/cubic foot (30 to 160 kg/hour/$m^3$) of bed volume.

A particularly desirable method for producing linear low density polyethylene polymers according to the present invention is in a single fluid bed reactor unit which is described in U.S. Patent No. 4,481,301.

For film production, the products may contain any of various additives conventionally added to polymer compositions such as lubricants, microtalc, stabilizers, antioxidants, compatibilizers and pigments. These reagents can be employed to stabilize the products against oxidation. For example, additive packages comprising 400-1200 ppm hindered phenol(s); 700-2000 ppm phosphites; 250 to 1000 ppm antistats and 250-1000 ppm stearates can be used. The polymers can be added directly to a blown film extruder, e.g., a Sterling extruder, to produce films having a thickness of, for example, 0.5 to 5 mils (0.013 to 0.13 mm).

The following Examples further illustrate the invention.

The properties of the polymers produced in the Examples were determined by the following test methods:

| Density | ASTM D-1505 - a plaque is made and conditioned for one hour at 100°C to approach equilibrium crystallinity. Measurement for density is then made in a density gradient column; reported as gms/cc. |
| --- | --- |
| Melt Index (MI), $I_2$ | ASTM D-1238 - Condition E Measured at 190°C - reported as grams per 10 minutes. |
| Melt Index, $I_{10}$ | ASTM D-1238, measured at 190°C, using 10 kg weight |
| High Load Melt Index | ASTM D-1238 - Condition F Measured at 10.5 times the weight used in the $I_{21}$ melt index test above. |
| Melt Flow Ratio (MFR) | $\frac{I_{21}}{I_2}$ |

EXAMPLES

## Example 1

Raw materials used in catalyst preparation included 504 g of Davison 952-1836 silica, 677 g of methylaluminoxane in toluene solution (30 wt.% MAO), 7.136 g of bis(n-butylcyclopentadienyl)zirconium dichloride.

The steps of the catalyst preparation are set forth below:

1. Dehydrate the 952-1836 silica at 250°C for 4 hours using air to purge. Then purge with nitrogen on cooling.
2. Transfer the silica to a mix-vessel.
3. Add 7.136 g of bis(n-butylcyclopentadienyl) zirconium dichloride and 677 g of methylaluminoxane to a bottle.
4. Agitate the catalyst solution in the bottle until the metallocene dissolves in the MAO solution.
5. Transfer the MAO and metallocene solution into the mix-vessel containing the dehydrated 952-1836 silica slowly while agitating the silica bed vigorously to make sure that the catalyst solution is well dispersed into the silica bed.
6. After the addition, continue to agitate the catalyst for 1/2 hours.

5

7. Start drying the catalyst by purging with nitrogen for 5 hours at 45°C.

8. Sieve the catalyst to remove particles larger than 150 micron.

9. The catalyst has the following analysis:

Yield = 767 g catalyst (from 500 g of silica)

Al = 9.95 wt.%

Zr = 0.19 wt.%

## Example 2

To produce a polymer for low density film, 0.918 g/cc, 1 MI, 17 MFR, in a fluid bed gas phase reactor the following process conditions were employed.

| Process Conditions: | |
| --- | --- |
| Fluidization velocity | 1.7 ft/sec (0.5 m/sec) |
| Residence time | 2.5 hours |
| Temperature | 84°C |
| Ethylene | 220 psi (1517 kPa) |
| Hexene | 3.6 psi (25 kPa) |
| Isopentane | 50 psi (345 kPa) |
| Carbon dioxide | 3 ppm |
| Ash | 200 to 250 ppm |

The catalyst was that of Example 1.

## Example 3

To produce a polymer for cast film of 0.918 g/cc density, 2.5 MI, 16 MFR, the following process conditions were employed:

| Fluidization velocity | 1.7 ft/sec (0.5 m/sec) |
| --- | --- |
| Residence time | 2.5 hours |
| Temperature | 77.5 °C |
| Ethylene | 180 psi (1240 kPa) |
| Hexene | 3.6 psi (25 kPa) |
| Isopentane | 38 psi (262 kPa) |
| Ash | 100 ppm |

The catalyst was that of Example 1.

## Example 4

A variety of resins were produced with the catalyst formulation described in example 1 and the process of example 2. The resins were characterized for their $I_2$ swell and compared to prior art metallocene resins. Figure 1 clearly shows that the invention resins have significantly higher swell (elasticity) compared to prior art resins. It is because of this high elasticity that the invention resins can be blown into film without encountering bubble instability problems.

## Example 5

A set of resins produced with the catalyst of example 1 and process similar to example 2 were characterized for their MWD using $I_{10}/I_2$ and Mw/Mn measurements. The $I_{10}/I_2$ values were compared to other metallocene resins. The results are summarized in the following table:

Table II

| LLDPE $I_{10}/I_2$ Characteristics | | | | | | |
|---|---|---|---|---|---|---|
| Sample | Density | $I_2$ | MFR | $I_{10}/I_2$ | $I_{10}/I_2$-4.63 | Mw/Mn |
| B | 0.917 | 1.2 | 16.7 | 5.58 | 0.95 | 2.6 |
| C | 0.904 | 0.7 | 17.4 | 6.07 | 1.44 | 2.9 |

The invention Zr LLDPE resins showed a narrow MWD (Mw/Mn < 3.0) and gave values of $I_{10}/I_2$-4.63 ranging from 0.95-1.44 less than the 2.6-2.9 for Mw/Mn. In contrast, the resins of U.S. Patent 5,272,236 have an $I_{10}/I_2$ which is greater than the Mw/Mn of the same resin.

**Example 6**

This Example demonstrates how the swell characteristics of LLDPE copolymers made from catalyst described in Example 1 and process similar to Example 2 and 3 can be controlled by selecting the proper levels of process modifier:

Table III

| Effect of Modifier on resin Swell | | | | |
|---|---|---|---|---|
| Sample | Modifier | Density | $I_2$ | $I_2$ Swell % |
| D | 0.2 ppm $O_2$ | 0.917 | 2.8 | 14 |
| E | none | 0.917 | 2.8 | 6.7 |

**Claims**

1. An ethylene copolymer comprising at least 80 weight percent of ethylene units, which exhibits $I_{10}/I_2$ of less than 7, Mw/Mn of less than 3, a percentage increase in swell, during measurement of $I_2$ of the composition, which is greater than 6%, and $I_{10}/I_2$-4.63 which is less than the Mw/Mn [wherein $I_2$ and $I_{10}$ are measured according to ASTM D1238].

2. A copolymer as claimed in Claim 1, which exhibits an MI ($I_2$) of 0.1 to 300.

3. A copolymer as claimed in Claim 1, which exhibits an MI ($I_2$) of 0.1 to 5.0.

4. A copolymer as claimed in any preceding Claim, wherein the copolymer comprises an alpha olefin of 3 to 10 carbon atoms.

5. A copolymer as claimed in Claim 4, wherein the alpha olefin is selected from butene-1, hexene-1, 4-methylpentene-1, and octene-1.

6. A copolymer as claimed in any preceding Claim, having a density of 0.88 to 0.965 g/cc, a MFR of 15 to 20, and a $M_w/M_n$ of 2.5 to 3.0.

7. A film produced from a copolymer as claimed in any preceding Claim.

**Patentansprüche**

1. Ethylencopolymer, das mindestens 80 Gew.-% Ethylen-Einheiten umfaßt, das einen $I_{10}/I_2$ von weniger als 7, eine Mw/Mn von weniger als 3, eine prozentuelle Zunahme beim Quellen, während der Messung von $I_2$ der Zusammensetzung, die größer als 6 % ist, und einen Wert für $I_{10}/I_2$-4,63 zeigt, der kleiner als die Mw/Mn ist (wobei $I_2$ und $I_{10}$ nach ASTM D1238 gemessen werden).

2. Copolymer nach Anspruch 1, das einen MI ($I_2$) von 0,1 bis 300 zeigt.

**3.** Copolymer nach Anspruch 1, das einen MI ($I_2$) von 0,1 bis 5,0 zeigt.

**4.** Copolymer nach einem der vorstehenden Ansprüche, wobei das Copolymer ein $\alpha$-Olefin mit 3 bis 10 Kohlenstoffatomen umfaßt.

**5.** Copolymer nach Anspruch 4, wobei das $\alpha$-Olefin aus Buten-1, Hexen-1, 4-Methylpenten-1 und Octen-1 ausgewählt ist.

**6.** Copolymer nach einem der vorstehenden Ansprüche mit einer Dichte von 0,88 bis 0,965 g/cm$^3$, einem MFR von 15 bis 20 und einer $M_w/M_n$ von 2,5 bis 3,0.

**7.** Folie, hergestellt aus einem Copolymer nach einem der vorstehenden Ansprüche.

**Revendications**

**1.** Un copolymère d'éthylène comprenant au moins 80 % en poids de motifs éthylène, qui présente un $I_{10}/I_2$ inférieur à 7, un $M_w/M_n$ inférieure à 3, une augmentation de la dilatation en pourcentage, au cours de la mesure de $I_2$ de la composition, qui est supérieure à 6 %, et un $I_{10}/I_2$-4,63 qui est inférieur aux $M_w/M_n$ (où $I_2$ et $I_{10}$ ont été mesurés selon ASTM D-1238).

**2.** Un copolymère selon la revendication 1, qui présente un MI ($I_2$) de 0,1 à 300.

**3.** Un copolymère selon la revendication 1, qui présente un MI ($I_2$) de 0,1 à 5,0.

**4.** Un copolymère selon l'une quelconque des revendications précédentes, dans lequel le copolymère comprend une $\alpha$-oléfine ayant 3 à 10 atomes de carbone.

**5.** Un copolymère selon la revendication 4, dans lequel l'$\alpha$-oléfine est choisie parmi butène-1, hexène-1, 4-méthylpentène-1 et octène-1.

**6.** Un copolymère selon l'une quelconque des revendications précédentes, présentant une densité de 0,88 à 0,965 g/cm$^3$, un MFR de 15 à 20, et un $M_w/M_n$ de 2,5 à 3,0.

**7.** Un film obtenu à partir d'un polymère selon l'une quelconque des revendications précédentes.